# FASCICULE DE BREVET EUROPEEN

(11) **EP 4 127 812 B1**
(45) Date de publication et mention de la délivrance du brevet: **02.07.2025**
(21) Numéro de dépôt: 21712996.4
(22) Date de dépôt: 16.03.2021
(51) Int. Cl.: G02B 25/00, G02B 27/02, G02B 27/01

(54) **LOUPE ELECTRONIQUE D'HORLOGER, ENSEMBLE DE LOUPE ELECTRONIQUE D'HORLOGER ET PROCEDE POUR EFFECTUER UN CONTROLE D'UN PRODUIT HORLOGER, NOTAMMENT D'UN MECANISME DE MONTRE**
LUPE FÜR EINEN ELEKTRONISCHEN UHRMACHER, LUPE FÜR EINEN ELEKTRONISCHEN UHRMACHER UND VERFAHREN ZUR DURCHFÜHRUNG EINER PRÜFUNG EINES UHRPRODUKTES, INSBESONDERE EINES UHRMECHANISMUS
ELECTRONIC WATCHMAKER'S LOUPE, ELECTRONIC WATCHMAKER'S LOUPE ASSEMBLY AND METHOD FOR CARRYING OUT A CHECK OF A WATCH PRODUCT, IN PARTICULAR A WATCH MECHANISM

(30) Priorité: 27.03.2020 CH 3732020
(43) Date de publication de la demande: 08.02.2023
(73) Titulaire: Richemont International S.A., 1752 Villars-sur-Glâne (CH)
(72) Inventeur: PALMISANO, Antonio, 8253 Diessenhofen (CH); SPYCHER, Raphael, 8264 Eschenz (CH); COLUCCI, Angela, 8200 Schaffhausen (CH)
(74) Mandataire: Novagraaf International SA
(86) Numéro de dépôt international: PCT/EP2021/056692
(87) Numéro de publication internationale: WO 2021/191002

(56) Documents cités:
- FR-A1- 2 379 082
- KR-A- 20150 039 316
- US-B1- 6 384 982

## Description

La présente invention concerne de manière générale une loupe électronique d'horloger, la loupe électronique étant destinée à observer un produit horloger, le produit horloger étant notamment un mécanisme de montre. L'invention se rapporte également à un ensemble de loupe électronique d'horloger, l'ensemble de loupe étant destiné à observer un produit horloger, le produit horloger étant notamment un mécanisme de montre. L'invention concerne un procédé pour effectuer un contrôle d'un produit horloger, le produit horloger étant notamment un mécanisme de montre.

### Domaine technique

De manière traditionnelle, un horloger observe les détails d'un produit horloger au moyen d'une loupe d'horloger qu'il ajuste de manière précise contre son œil. L'horloger garde en continu la loupe bloquée avec son arcade sourcilière et la partie supérieure de sa joue. Les différentes loupes sur le marché présentent par exemple des grossissements allant de 4x à 10x. L'horloger observe les détails du produit horloger pour en déterminer la provenance, effectuer un contrôle visuel, mais également pour une opération d'assemblage, maintenance, nettoyage ou réglage, ou encore pour le réparer.

Le produit horloger est notamment une montre avec son mécanisme et toutes ses parties décoratives, mais peut être également un article de joaillerie, tel qu'un bijou, avec des pierres précieuses, par exemple des diamants ou des pierres ornementales (malachite, opale, turquoise, perle, nacre ...).

Cependant, comme l'utilisateur de la loupe reste concentré sur son travail d'observation du produit horloger à travers la loupe, il peut avoir besoin immédiatement d'autres informations pour effectuer toutes ses tâches. L'utilisateur peut retirer la loupe de son œil, consulter des informations placées à côté de lui sur son établi sous forme de documents imprimés ou sur un écran d'ordinateur. Cette opération de retrait de la loupe puis de replacement de la loupe au niveau de l'œil pour continuer le travail d'observation, va engendrer chez l'utilisateur non seulement une perte de temps, mais également une fatigue visuelle. Cette fatigue survient en raison de la focalisation nécessaire lorsque l'utilisateur passe de la phase de consultation de documents sans la loupe, à la phase d'observation avec la loupe, et inversement. Le document US6384982 divulgue un système d'affichage d'image compact pour lunettes ou autres structures à porter sur la tête, et le document FR2379082 divulgue un système optique grossissant.

### Résumé de l'invention

Un but de la présente invention est de répondre aux inconvénients de l'art antérieur mentionnés ci-dessus et en particulier, tout d'abord, de permettre à un utilisateur d'observer un produit horloger et d'avoir en plus directement accès à des données.

Un premier aspect de l'invention concerne une loupe électronique d'horloger, destinée à observer un produit horloger, notamment un mécanisme de montre, la loupe électronique étant munie:
- d'un objectif grossissant, pour observer le produit horloger,
- de moyens de communication, pour recevoir des données,
- d'un écran d'affichage, pour afficher les données,
- d'un séparateur de faisceau, prévu pour diriger simultanément vers un œil d'un utilisateur au moins une image du produit horloger provenant de l'objectif grossissant et au moins une image de l'écran d'affichage.

Autrement dit, l'utilisateur va pouvoir voir directement et en continu le produit horloger qu'il est en train d'observer, et simultanément des données qui vont apparaitre sur le produit horloger qu'il est en train d'observer. Les données qui sont sous la forme d'une ou plusieurs images sont vues par l'œil de l'utilisateur et se superposent en incrustation sur la ou sur les images du produit horloger. Les données sont reçues par la loupe électronique grâce aux moyens de communication.

Avantageusement, la loupe électronique comprend en outre une caméra d'acquisition, pour acquérir au moins une image du produit horloger, les moyens de communication étant prévus pour envoyer à un utilisateur distant l'image du produit horloger acquise par la caméra d'acquisition, le séparateur de faisceau étant prévu pour diriger simultanément vers la caméra d'acquisition au moins une image du produit horloger provenant de l'objectif grossissant et au moins une image de l'écran d'affichage.

Avantageusement, l'invention concerne une loupe électronique d'horloger, destinée à observer un produit horloger, notamment un mécanisme de montre, la loupe électronique étant munie:
- d'un objectif grossissant, pour observer le produit horloger,
- de moyens de communication, pour recevoir des données,
- d'une caméra d'acquisition, pour acquérir au moins une image du produit horloger,
- d'un séparateur de faisceau, prévu pour diriger simultanément vers un œil d'un utilisateur et vers la caméra d'acquisition au moins une image du produit horloger provenant de l'objectif grossissant.

L'utilisateur va ainsi observer le produit horloger, mais grâce à la caméra, il va également pouvoir simultanément envoyer à un utilisateur situé à distance une image ou un flux continu d'images, connu sous la dénomination de « streaming » du produit observé. L'utilisateur distant peut être dans la même pièce et juste à côté de l'utilisateur, ou peut être éloigné à de milliers de kilomètres de la pièce. De plus, grâce à la caméra l'utilisateur va également pouvoir envoyer à l'utilisateur situé à distance l'image ou le flux continu d'images, connu sous la dénomination de « streaming » du produit observé, et simultanément les données sous la forme d'une ou plusieurs images superposées se trouvant avantageusement sur l'axe optique œil du porteur - loupe électronique - produit horloger.

Les utilisations possibles de la loupe électronique selon l'invention peuvent être nombreuses. A titre d'exemple, une utilisation possible de la loupe électronique peut être commerciale, un utilisateur qui est une personne en charge de la vente montrant à distance à son ou à ses clients les détails du produit horloger. Une autre utilisation possible de la loupe électronique peut être à des fins d'enseignement, un utilisateur qui est un maître horloger montrant à des étudiants comment se monte le mécanisme du produit horloger qui est dans ce cas une montre, comment le mécanisme fonctionne, ou comment effectuer un entretien, etc. Une autre utilisation possible de la loupe électronique peut être à des fins d'expertises, un maître joailler montrant à ses collègues sur place ou à distance toutes les caractéristiques d'une pierre précieuse.

Avantageusement, le séparateur de faisceau peut comprendre un miroir semi-réfléchissant pour séparer l'image de l'écran d'affichage en une première partie réfractée dirigée vers la caméra et une deuxième partie réfléchie dirigée vers l'œil de l'utilisateur, et/ou pour séparer l'image du produit horloger provenant de l'objectif grossissant, en une première partie réfractée dirigée vers l'œil de l'utilisateur et une deuxième partie réfléchie dirigée vers la caméra d'acquisition.

Avantageusement, la loupe électronique peut comprendre des moyens d'éclairage pour illuminer ou éclairer le produit horloger. En particulier, on peut prévoir des moyens d'éclairage sous la forme d'un disque percé ou d'un anneau coaxial à l'objectif grossissant. En d'autres termes, la loupe électronique peut être équipée de moyens d'éclairage qui entourent l'objectif grossissant pour éclairer le produit horloger sans générer d'ombres parasites.

Avantageusement, les moyens d'éclairage peuvent être un anneau lumineux agencé pour se monter de manière amovible sur ou autour de l'objectif grossissant. On peut envisager un montage de type ¼ de tour ou baïonnette, avec des contacts électriques intégrés.

Avantageusement, la loupe électronique peut comprendre :
- un châssis support,
- un châssis secondaire monté de manière amovible sur le châssis support,
- des moyens optiques, comprenant au moins l'objectif grossissant, montés solidaires du châssis secondaire,
le châssis support comprenant une interface gauche et une interface droite chacune agencée pour recevoir le châssis secondaire, de sorte à positionner l'objectif grossissant en regard d'un œil gauche ou d'un œil droit de l'utilisateur portant la loupe électronique, avec le châssis secondaire respectivement reçu par l'interface gauche ou par l'interface droite du châssis support.

Avantageusement, le châssis secondaire peut présenter au moins une symétrie. En conséquence, le montage sur l'interface gauche ou droite est aisé.

Avantageusement, le châssis secondaire peut comprendre des moyens de réglage agencés pour faire varier une position relative entre le châssis secondaire et le châssis support, de sorte à ajuster par rapport à l'œil de l'utilisateur une position des moyens optiques embarqués sur le châssis secondaire. On peut envisager une glissière avec une molette agissant sur une vis de précision. On peut prévoir un réglage en profondeur, et aussi un réglage latéral et/ou vertical.

Avantageusement, la loupe électronique peut comprendre des moyens de réception d'un verre correcteur. En particulier, on peut prévoir des moyens de réception pour fixer de manière amovible un verre correcteur entre le produit horloger à observer et un œil de l'utilisateur. De préférence, les moyens de réception sont agencés pour fixer de manière amovible un verre correcteur entre l'objectif grossissant et un œil de l'utilisateur. On peut prévoir de fixer sur la loupe électronique une ou plusieurs lentilles et ou filtres à lentille par un dispositif mécanique, de préférence muni d'aimants , pour corriger éventuellement une amétropie du porteur. L'amétropie est une anomalie de la réfraction, un défaut optique de l'œil, par exemple une myopie ou un astigmatisme du porteur, qui peut alors utiliser la loupe électronique sans ses lunettes.

Dans un autre mode de réalisation, non représenté dans les figures, la loupe électronique comprend un premier dispositif optoélectronique pour la mesure automatisée d'une éventuelle anomalie de la réfraction du porteur par le moyen d'un dispositif appelé auto-réfractomètre à l'aide, par exemple, d'un faisceau infrarouge pour déterminer automatiquement la dioptrie, l'unité de mesure présentée par le symbole D pour quantifier l'importance d'une amétropie. La dioptrie D est une unité de puissance optique ou vergence connu en ophtalmologie qui une fois mesurée et quantifiée pour un porteur servira à régler automatiquement un deuxième dispositif optoélectronique d'une ou plusieurs lentilles intégrées dans la loupe électronique jusqu'à ce que le porteur ait une vision nette du produit. Ce deuxième dispositif d'ajustement aide ainsi à augmenter l'acuité visuelle du porteur. L'acuité visuelle, exprimée ou quantifiée en dixièmes (par exemple : 10/10, 8/10 etc.), décrit la capacité de l'œil à faire la distinction entre deux points distincts, capacité particulièrement importante dans le domaine de l'horlogerie et de la bijouterie. L'acuité visuelle est donc liée au pouvoir séparateur de l'œil, qui repose sur l'angle de résolution minimum (Minimum Angle of Resolution: MAR). Ce premier dispositif intégrant un auto-réfractomètre de mesure de dioptrie en combinaison avec un deuxième dispositif d'ajustement automatique des lentilles dans la loupe électronique pour améliorer la vision de l'œil du porteur.

Avantageusement, la loupe électronique peut comprendre un objectif zoom d'un dispositif optique, dont la valeur du grossissement peut être réglée librement en continu ou à plusieurs échelons de manière automatique par le porteur ou un tiers à l'aide de moyens mécanique ou électromécanique (tel que interrupteur ou commutateur rotatif continu ou multi-position etc.) ou électronique (tel qu'un écran tactile, télécommande etc.) pour choisir le grossissement désiré ou selon le besoin pour observer le produit horloger.

Avantageusement, la loupe électronique peut comprendre des moyens de réception d'un verre neutre ou un verre filtrant sans caractéristique de grossissement que le porteur pourra choisir selon son besoin pour observer le produit horloger ou pour présenter par exemple son atelier horloger ou le centre de production.

Selon un deuxième aspect de l'invention, un ensemble de loupe électronique d'horloger, destinée à observer un produit horloger, notamment un mécanisme de montre, comprend:
- une unité de traitement de données, possédant des données, et
- la loupe électronique, selon selon le premier aspect de l'invention, les moyens de communication de la loupe électronique communiquant avec l'unité de traitement de données, pour recevoir les données et/ou pour envoyer à l'unité de traitement de données l'image du produit horloger acquise par la caméra d'acquisition.

Avantageusement, l'ensemble de loupe peut comprendre des moyens pour commander la loupe électronique, les moyens de communication de la loupe électronique communiquant avec les moyens pour commander. Avec un tel accessoire qui se connecte à la loupe électronique, par exemple de type souris d'ordinateur, l'utilisateur va pouvoir piloter la loupe en gardant une vue sur le produit horloger. L'utilisateur de la loupe voit la commande sur l'écran d'affichage de la loupe électronique. A titre d'exemple, la commande peut être une flèche de pointeur, une icone allumage-extinction de l'écran, réglage de la luminosité de l'écran, etc.

Avantageusement, l'ensemble de loupe peut comprendre des moyens de reconnaissance d'un outil à utiliser avec le produit horloger, pour sélectionner parmi des données concernant le produit horloger au moins une information relative à l'outil, les moyens de communication de la loupe électronique communiquant avec les moyens de reconnaissance pour recevoir l'information sélectionnée relative à l'outil, de sorte à afficher l'information relative à l'outil sur l'écran d'affichage de la loupe électronique.

Avec un tel accessoire qui se connecte à la loupe électronique et qui assure la reconnaissance des outils concernant le produit horloger, l'utilisateur va avoir immédiatement l'information au sujet de l'outil à utiliser pour effectuer une tâche particulière sur le produit horloger. Dans le cas du mécanisme de montre, l'utilisateur de la loupe voit l'information concernant le bon outil à utiliser, tout en gardant l'œil et en restant concentré sur son produit horloger. Par exemple, l'information au sujet d'un tournevis précis va s'afficher, et l'utilisateur va saisir le tournevis adéquat et va dévisser une vis particulière. Ou encore l'utilisateur va revisser une vis particulière, avec une information s'affichant relative au couple de serrage recommandé par le fabriquant.

Avantageusement, l'ensemble de loupe peut comprendre des moyens de reconnaissance d'au moins un composant du produit horloger, pour sélectionner parmi des données concernant le produit horloger au moins une information relative au composant, les moyens de communication de la loupe électronique communiquant avec les moyens de reconnaissance pour recevoir l'information sélectionnée relative au composant, de sorte à afficher l'information relative au composant sur l'écran d'affichage de la loupe électronique.

Avec un tel accessoire qui se connecte à la loupe électronique et qui assure la reconnaissance d'un composant concernant le produit horloger, l'utilisateur va avoir immédiatement l'information au sujet du composant à utiliser pour effectuer une tâche particulière sur le produit horloger en utilisant le composant. Dans le cas du mécanisme de montre, l'utilisateur de la loupe voit l'information concernant le bon composant à utiliser, tout en gardant l'œil et en restant concentré sur son produit horloger. Par exemple dans une étape de montage d'un mécanisme de montre, l'information au sujet d'un composant précis va s'afficher, et l'utilisateur va saisir le composant adéquat, et le monter. Ou encore l'utilisateur va monter de manière optimale un module intégrant plusieurs composants, avec une information s'affichant relative aux recommandations du fabriquant.

Avantageusement, l'ensemble de loupe peut comprendre un dispositif de mesure de paramètres concernant le produit horloger. A titre d'exemple et dans le cas d'un mécanisme d'une montre, les paramètres peuvent être la marche, la fréquence, l'amplitude des oscillations, la réserve de marche, etc. Si nécessaire, l'horloger va pouvoir faire les réglages du mécanisme sur la base de ces paramètres.

Avantageusement, l'unité de traitement des données peut comprendre une machine de type ordinateur connectée avec un serveur. La machine de type ordinateur peut être un ordinateur personnel, un smartphone, une montre connectée (« smartwatch »), une tablette ou tout autre type d'accessoire portable intégrant de l'informatique et de l'électronique (« wearables »).

Avantageusement, la machine de type ordinateur peut être connectée à un réseau informatique externe. La connexion à internet permet la transmission des images à distance.

Avantageusement, l'ensemble de loupe peut comprendre en outre un routeur sans fil, formant interface entre les moyens de communication de la loupe électronique, et/ou l'unité de traitement des données et/ou les moyens de reconnaissance et/ou le dispositif de mesure.

Avantageusement, les données peuvent comprendre notamment:
- des informations d'identification du produit horloger, et/ou
- des informations techniques du produit horloger, et/ou
- des informations d'identification d'un sous ensemble du produit horloger, et/ou

- des informations d'identification d'un composant du produit horloger, et/ou
- des informations d'identification d'un stade de montage du produit horloger.

Ainsi des données se rapportant à l'identité du produit horloger vont pouvoir s'afficher sur l'écran de la loupe. Dans le cas du mécanisme de montre, les données telles que par exemple toutes les références de la montre, dont la date de fabrication et l'horloger impliqué dans le montage, le numéro de référence du calibre, les références des modules constitutifs, les images de CAO (conception assistée par ordinateur), le stade du montage, sont utiles pour l'utilisateur de la loupe. D'autres données, telles que avantages et faiblesses du calibre, points particuliers à surveiller peuvent également s'afficher. Une ou plusieurs de ces données s'affichent en étant superposées à l'image du produit horloger observé.

Selon un autre aspect de l'invention, un procédé pour effectuer un contrôle d'un produit horloger, notamment d'un mécanisme de montre, comprend les étapes consistant:
- à observer le produit horloger avec un objectif d'une loupe électronique,
- à acquérir au moins une image du produit horloger avec une caméra de la loupe électronique, et
- à envoyer l'image du produit horloger acquise à une machine de type ordinateur à proximité de la loupe électronique.

Ce procédé de contrôle avec ces étapes permet à un horloger possédant moins de connaissances d'observer le produit horloger avec la loupe électronique, d'envoyer l'image ou le flux d'images observées et acquises et de requérir l'assistance d'un horloger plus confirmé pour assurer la maintenance ou la réparation, ce qui est d'autant plus utile si le produit horloger est rare ou complexe.

Avantageusement, le procédé peut comprendre en outre l'étape consistant à envoyer l'image du produit horloger acquise à une deuxième machine de type ordinateur, distant de la machine de type ordinateur à proximité de la loupe électronique. Grâce à cette étape du procédé de contrôle, un horloger communique à distance avec l'un de ses collègues, en utilisant un logiciel qui permet aux utilisateurs de passer des appels téléphoniques ou vidéo via Internet, ainsi que le partage d'écran.

Avantageusement, le procédé comprend en outre les étapes consistant:
- à envoyer à une unité de traitement de données l'image du produit horloger acquise, l'unité de traitement de données étant programmée pour reconnaître le produit horloger, par comparaison entre l'image du produit horloger acquise et des données concernant le produit horloger, et
- à afficher les données concernant le produit horloger sur un écran d'affichage de la loupe électronique.

Grâce à ces étapes du procédé de contrôle, une reconnaissance automatique du produit horloger va se faire, toutes les informations utiles et stockées dans l'unité de traitement de données vont pouvoir s'afficher sur l'écran de la loupe et être visibles par l'utilisateur en superposition avec le produit horloger.

Avantageusement, le procédé peut comprendre en outre les étapes consistant:
- à reconnaitre un outil à utiliser avec le produit horloger, pour générer au moins une information relative à l'outil, et
- à afficher l'information relative à l'outil générée sur l'écran d'affichage de la loupe électronique.

Avantageusement, le procédé peut comprendre en outre les étapes consistant:
- à reconnaitre au moins un composant du produit horloger, pour générer au moins une information relative au composant du mécanisme de montre, et
- à afficher l'information relative au composant du produit horloger générée sur l'écran d'affichage de la loupe électronique.

### Brève description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels:
- Fig. 1 représente une vue en perspective éclatée et en transparence d'une loupe électronique selon l'invention;
- Fig. 2 représente une vue latérale du module optoélectronique de la loupe de la Fig. 1 et selon un premier mode de réalisation;
- Fig. 3 représente une vue latérale simplifiée du module optoélectronique de la loupe selon un deuxième mode de réalisation;
- Fig. 4 représente un ensemble de loupe électronique d'horloger selon une première forme de réalisation; et
- Fig. 5 représente un ensemble de loupe électronique d'horloger selon une deuxième forme de réalisation :
- Fig. 6 représente un troisième mode de réalisation d'une loupe électronique ;
- Fig. 7 représente un détail d'un module optoélectronique de la loupe électronique de la figure 6 en vue arrière.

### Description détaillée

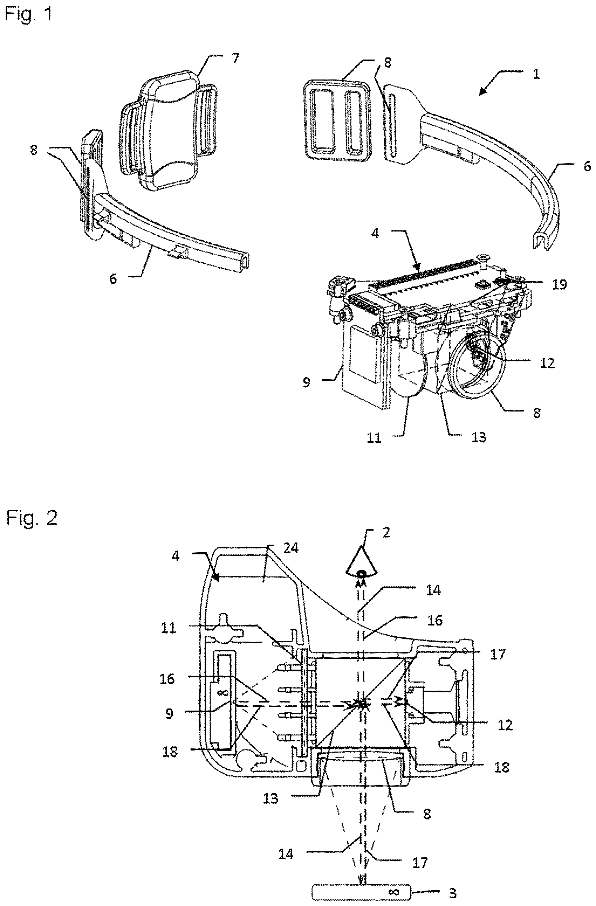

Comme le montre les Figs. 1-3, une loupe électronique d'horloger 1 selon l'invention est positionnée par un utilisateur directement contre son œil 2 et sert à observer un produit horloger 3. Les Figs. 1-3 illustrent ici une loupe destinée à être positionnée sur l'œil droit de l'utilisateur. Selon un autre mode de réalisation, une loupe de conception spécifique permettrait à l'utilisateur de la positionner indifféremment sur son œil droit ou sur son œil gauche. L'utilisateur, qui est un horloger, travail généralement avec un œil 2 regardant au travers de la loupe grossissante et un œil libre. L'œil libre de l'utilisateur permet d'identifier les différentes pièces sur l'établi et de venir les placer dans la zone de travail (zone du zoom). La loupe électronique 1 comprend un module optoélectronique 4, un tour de tête 6, visible partiellement en en éclaté en Fig. 1, et un bloc d'alimentation électrique 7 placé à l'arrière du tour de tête 6. Le tour de tête 6 est muni de moyens d'ajustage 8 pour ajuster le serrage de la loupe électronique 1 autour de la tête de l'utilisateur.

Le bloc d'alimentation électrique 7 alimente le module optoélectronique 4 par des câbles électriques (non représentés). Il est à noter que l'alimentation, par exemple sous forme d'une batterie rechargeable ou de piles, peut également être placée dans le module optoélectronique 4.

Le module optoélectronique 4 selon le premier mode de réalisation de la Fig. 1 et selon le deuxième premier mode de réalisation de la Fig. 2 comprend un objectif grossissant, dans ce cas sous la forme d'une lentille grossissante 8. La lentille grossissante 8 est choisie de sorte que l'objet devant être observé, c'est-à-dire le produit horloger 3, est à une focalisation à l'infini. Cette focalisation présente l'avantage de ne pas générer de fatigue visuelle pour l'utilisateur, le cristallin de son œil 2 restant focalisé à l'infini. Cette focalisation présente aussi l'avantage que l'utilisateur garde une vision nette du produit horloger 3 qu'il est en train d'observer, même lorsqu'il se rapproche ou s'éloigne légèrement du produit horloger 3.

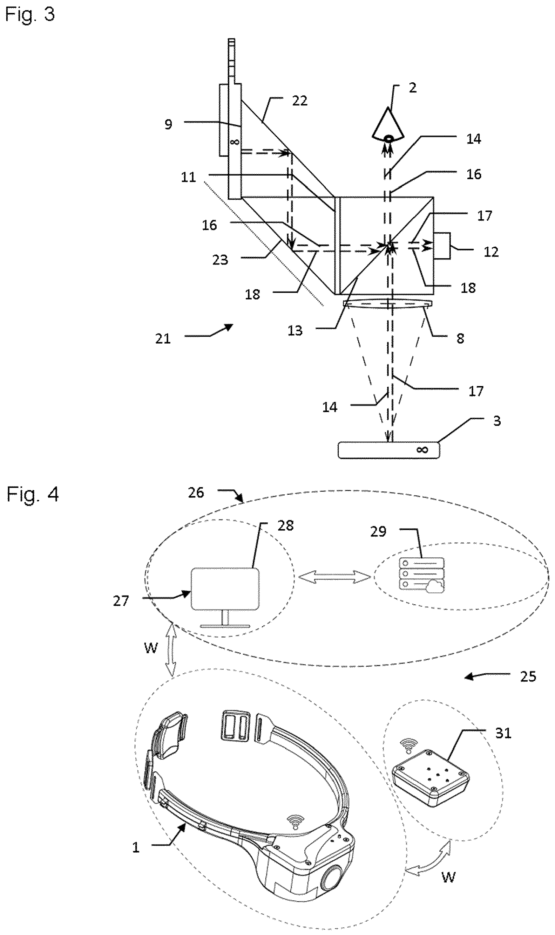

Le module optoélectronique 4 comprend un écran d'affichage 9, une lentille optique, par exemple de type Fresnel 11, une caméra d'acquisition d'images 12 et un séparateur de faisceau 13. Le séparateur 13 peut être sous la forme d'un prisme séparateur ou d'un miroir semi transparent. Le séparateur 13 est prévu pour diriger les images du produit horloger 3 provenant de la lentille grossissante 8 vers l'œil 2 de l'utilisateur (partie réfractée ou faisceau réfracté indiqué par les Flèches 14 en Figs. 2 et 3) et pour diriger simultanément les images de l'écran 9 vers l'œil 2 de l'utilisateur (partie réfléchie ou faisceau réfléchi indiqué par les Flèches 16 en Figs. 2 et 3). Le séparateur 13 est prévu pour diriger les images du produit horloger 3 provenant de la lentille grossissante 8 vers la caméra 12 (partie réfléchie ou faisceau réfléchi indiqué par les Flèches 17 en Figs. 2 et 3) et pour diriger simultanément les images de l'écran 9 vers la caméra 12 (partie réfractée ou faisceau réfracté indiqué par les Flèches 18 en Figs. 2 et 3).

L'objectif grossissant 8 peut être échangé par d'autres objectifs avec différents facteurs de grossissement, choisis en fonction de ce que souhaite l'utilisateur et du produit horloger 2, tout en gardant une focalisation à l'infini. La loupe électronique 1 présente l'avantage que l'utilisation d'autres objectifs n'a aucune influence sur l'utilisateur et sa fatigue visuelle ou sur la caméra 12, le cristallin de son œil 2 restant focalisé à l'infini.

L'écran 9 est prévu pour être à une focalisation à l'infini, en raison de la lentille de Fresnel 11, immédiatement à proximité du séparateur 13. La loupe électronique 1 présente ainsi l'avantage que le cristallin de l'œil 2 reste focalisé à l'infini lorsque l'utilisateur regarde à la fois le produit horloger 3 et reçoit les images de l'écran 9. La caméra 12 peut être prévue à focale fixe, réglée avec une focalisation à l'infini.

Le module optoélectronique 4 comprend une carte électronique ou circuit imprimé 19 connecté avec un ordinateur monocarte. Plus particulièrement, l'ordinateur monocarte présente des circuits de communication pour les moyens de communication, des circuits formant une mémoire de stockage et également un processeur. L'ordinateur monocarte dispose également d'un système d'exploitation permettant d'organiser l'utilisation des ressources par exemple des moyens de communication ou de la mémoire de stockage.

Dans le deuxième mode de réalisation représenté en Fig. 3, le module optoélectronique 21 comprend deux prismes réfléchissant à angle droit successifs 22 et 23. Le premier prisme 22 est positionné contre l'écran 9. Le deuxième prisme 23 est positionné entre le premier prisme 22 et la lentille de Fresnel 11. Le faisceau réfléchi 16 et le faisceau réfracté 18 en provenance de l'écran 9 entrent d'abord dans le premier prisme 22, sont réfléchis par le premier prisme 22, sortent du premier prisme 22, puis entrent dans le deuxième prisme 23, sont réfléchis par le deuxième prisme 23, sortent du deuxième prisme 23 et arrivent à la lentille de Fresnel 11.

Comme la distance entre l'objectif grossissant avec la lentille grossissante 8 et le produit horloger 3 est très petite dans le cas du premier mode de réalisation de la loupe électronique 1 avec le module optoélectronique 4 de la Fig. 2, la main droite de l'utilisateur pourrait entrer en contact avec le boîtier 24 du module optoélectronique 21. Cet agencement avec deux prismes 22 et 23 du deuxième mode de réalisation de la Fig. 3 permet de modifier la position de l'écran 9 par rapport aux autres pièces, objectif grossissant 8, séparateur 13 et caméra 12, et de déplacer cet écran 9. La géométrie du boitier du module optoélectronique 21 du deuxième mode de réalisation est ainsi modifiée et rendue plus ergonomique. L'utilisateur va pouvoir intervenir plus aisément sur le produit horloger 3, d'autant plus que certaines opérations de maintenance ou de montage sont délicates à réaliser particulièrement dans le cas d'un mécanisme de montre.

Des données sont affichées sur l'écran 9. Ces données sont ainsi vues par l'utilisateur en superposition avec ce qu'il voit à travers l'objectif grossissant 8. Ces données sont également acquises par la caméra 12 en superposition avec ce que l'utilisateur voit à travers l'objectif grossissant 8.

Pour que la loupe électronique 2 affiche ces données sur l'écran 9 et/ou pour que les données et les images vues par l'utilisateur et transférées à la caméra 12 puissent être transmises, la loupe électronique 1 est intégrée dans un ensemble de loupe électronique d'horloger 25, selon une première forme de réalisation représenté en Fig. 4. L'ensemble de loupe 25 comprend une unité de traitement de données 26. L'unité de traitement des données 26 comprend par exemple une machine de type ordinateur 27, telle qu'un ordinateur personnel. La machine de type ordinateur 27 peut également être un ordinateur portable Laptop, un smartphone, une tablette ou une montre connectée. La loupe électronique 1 communique avec l'unité 26, et plus particulièrement avec machine de type ordinateur 27, par exemple grâce à la technologie sans fil Wi-Fi (Flèche W en Fig. 4). Il est à noter que la loupe électronique 1 peut être pilotée via un smartphone.

Le produit horloger 3 vu par l'utilisateur de la loupe électronique 1, et les images correspondantes transmises par la caméra d'acquisition 12, s'affichent sur un écran 28 de la machine de type ordinateur 27. Les données vont également être affichées en superposition sur l'écran 28. Ceci permet à d'autres utilisateurs qui sont situés à proximité immédiate de l'utilisateur de la loupe électronique 1 d'observer en streaming le produit horloger 3 et les données directement sur l'écran 28.

Lorsque la machine de type ordinateur 27 est connectée à un réseau informatique, par exemple Intranet ou Internet, les images et les données transmises par la caméra d'acquisition 12 peuvent être transmises à une ou plusieurs autres unités de traitement, ordinateurs personnels, ordinateurs portables Laptop, smartphones et/ou tablettes, situés alors à distance. Ceci permet à d'autres utilisateurs qui sont éloignés de l'utilisateur de la loupe électronique 1 d'observer en streaming le produit horloger 3 directement sur leur propre écran via une application dédiée ou par un browser Internet.

Il est possible que grâce à cette connexion à Internet des images ou des données en provenance d'une ou plusieurs autres unités de traitement situées à distance s'affichent, en superposition ou sous la forme d'un encart, sur l'écran d'affichage 9 de la loupe électronique 1. Cette connexion à Internet présente également l'avantage de permettre à l'utilisateur de la loupe électronique 1 de pouvoir passer un appel téléphonique ou vidéo via Internet, par exemple en utilisant une application de type Skype. L'utilisateur va également, pouvoir faire une conférence téléphonique et partager l'écran 28, tout en gardant la loupe électronique 1 devant son œil 2, et en restant concentré sur le produit horloger 3.

L'unité 26 peut comprendre un serveur à distance 29. Le serveur 29 sert à stocker une quantité importante d'informations et de données se rapportant à de très nombreux produits horlogers 3 et qui ont été préalablement mémorisées. La machine de type ordinateur 27 est connectée et communique avec le serveur 29 par exemple par liaison filaire. Le serveur 29 transfert des données spécifiques au produit horloger vers la machine de type ordinateur 27, qui transfert à son tour ces mêmes données aux moyens de communication 19 de la loupe électronique 1 et ces données sont affichées sur l'écran 9. Le serveur 29 sert aussi à stocker les images reçues de la caméra d'acquisition 12. Il est à noter que le serveur peut être un serveur dédié ou un cloud.

L'ensemble de loupe 25, selon la première forme de réalisation de la Fig. 4 peut comprendre un ou plusieurs accessoires 31 qui se connectent à la loupe électronique 1 et peuvent apporter des fonctionnalités supplémentaires à l'utilisateur. Quatre exemples d'accessoires sont présentés ci-dessous.

Un premier exemple d'accessoire 31 est une unité de commande de la loupe électronique 1 ou dispositif de type pointeur, tel qu'une souris d'ordinateur, que l'utilisateur déplace avec sa main. Avec ce dispositif, l'utilisateur commande la loupe électronique 1. L'utilisateur peut ainsi faire apparaitre un pointeur ou une flèche en superposition sur l'image du produit horloger 3 qu'il voit. L'utilisateur voit en temps réel le produit horloger 3 avec la flèche grâce à l'écran d'affichage 9. L'image composite est acquise par la caméra d'acquisition 12. Cette image composite peut ainsi être visualisée sur l'écran 28 de la machine de type ordinateur 27. Cette image peut ensuite être transmise à d'autres ordinateurs connectés à Internet. Comme autre exemple, l'utilisateur commande la loupe pour acquérir une image ou une vidéo, ou pour commencer le « streaming ». Il est aussi possible par exemple de régler l'intensité de l'écran de la loupe électronique 1.

Un deuxième exemple d'accessoire 31 est formé par des moyens de reconnaissance d'un outil pouvant être utilisé avec le produit horloger 3. Dans le cas où le produit horloger 3 est un mécanisme de montre, les moyens de reconnaissance de l'outil se présentent sous la forme d'un porte-outil, apte à maintenir un ou plusieurs outils, tels que tournevis, pinces, etc. Dès que l'utilisateur saisi un outil spécifique présent sur le porte-outil, le porte-outil reconnait le type d'outil et envoie une information relative à l'outil à la loupe électronique 1. Les moyens de communication 19 de la loupe électronique 1 communiquent avec les moyens de reconnaissance pour recevoir l'information sélectionnée relative à l'outil. Cette information relative à l'outil est transmise ensuite à la machine de type ordinateur 27 et transmise au serveur à distance 29.

Les données concernant le produit horloger 3 se rapportent à titre d'exemple à toutes les vis avec leurs paramètres propres, tels que dimensions, forme des empreintes, couples de serrage, outils spécifiques devant être utilisés, etc. A partir de l'information relative à l'outil reçue, le serveur à distance 29 sélectionne parmi toutes les données concernant le produit horloger 3, au moins une information relative à cet outil, par exemple le couple de serrage précis de la vis. Cette information est renvoyée à la machine de type ordinateur 27, qui la renvoie à la loupe électronique 1. L'information relative à l'outil spécifique choisi par l'utilisateur, va être chargée et va s'afficher sur l'écran d'affichage 9 de la loupe électronique 1. L'utilisateur va avoir sur l'écran d'affichage 9 le couple de serrage de la vis se superposant à l'image réelle du mécanisme sur lequel doit se placer la vis. Cette image composite peut ainsi être visualisée sur l'écran 28 de la machine de type ordinateur 27. Cette image peut ensuite être transmise à d'autres ordinateurs connectés à Internet.

Un troisième exemple d'accessoire 31 est formé par des moyens de reconnaissance d'au moins un composant du produit horloger 3. Dans le cas où le produit horloger 3 est un mécanisme de montre, les moyens de reconnaissance du composant se présentent sous la forme d'un porte-composant, sur lequel sont posés un ou plusieurs composants, tels que rouages, vis, ressorts, ponts, pièces de mouvement, ou encore un ou plusieurs sous-ensembles déjà préassemblés et constitués de plusieurs composants formant le mécanisme, etc. Dès que l'utilisateur saisi un composant spécifique présent sur l'accessoire, l'accessoire reconnait le type de composant en question et envoie une information relative à ce composant à la loupe électronique 1. Les moyens de communication 19 de la loupe électronique 1 communiquent avec les moyens de reconnaissance pour recevoir l'information sélectionnée relative au composant. Cette information relative au composant est transmise ensuite à la machine de type ordinateur 27 qui la transmet au serveur à distance 29.

Les données concernant le produit horloger 3 se rapportent à titre d'exemple aux plans et schémas indiquant le positionnement précis du ou des composants, outils spécifiques à utiliser, etc. Le serveur à distance 29 sélectionne parmi toutes les données concernant le produit horloger 3 au moins une information relative à ce composant. Cette information est renvoyée à la machine de type ordinateur 27, qui la renvoie à la loupe électronique 1. L'information relative au composant choisi par l'utilisateur, va être chargée et va s'afficher sur l'écran d'affichage 9 de la loupe électronique 1. L'utilisateur va avoir sur l'écran d'affichage 9 le schéma du positionnement du composant du mécanisme de montre se superposant à l'image réelle du mécanisme sur lequel doit se placer le composant. Cette image composite peut ainsi être visualisée sur l'écran 28 de la machine de type ordinateur 27. Cette image peut ensuite être transmise à d'autres ordinateurs connectés à Internet.

Un quatrième exemple d'accessoire 31 est un dispositif de mesure de paramètres concernant le produit horloger 3. Le dispositif se place à coté, contre, ou sur le produit horloger 3. Dans le cas où le produit horloger 3 est un mécanisme de montre, le dispositif intègre un capteur qui permet par exemple de mesurer la marche, la fréquence, l'amplitude des oscillations, la réserve de marche. Le dispositif de mesure de paramètres renvoie la ou les informations de mesure à la loupe électronique 1. Les moyens de communication 19 de la loupe électronique 1 communiquent avec le dispositif de mesure de paramètres pour recevoir l'information sélectionnée relative au produit horloger 3. Cette information relative au est transmise ensuite à la machine de type ordinateur 27 qui la transmet au serveur à distance 29.

Les données concernant le produit horloger 3 se rapportent à titre d'exemple aux valeurs préenregistrées nominales des paramètres du mécanisme horloger. Le serveur à distance 29 sélectionne parmi toutes les données concernant le produit horloger 3 au moins une information relative au paramètre. Cette information est renvoyée à la machine de type ordinateur 27, qui la renvoie à la loupe électronique 1. L'information relative au paramètre avec sa valeur nominale, va être chargée et va s'afficher sur l'écran d'affichage 9 de la loupe électronique 1. L'utilisateur qui est un horloger va pouvoir faire immédiatement les réglages du mouvement de la montre sur la base de la valeur nominale des paramètres. L'utilisateur va avoir sur l'écran d'affichage 9 à la fois la valeur mesurée et la valeur nominale se superposant à l'image réelle du mécanisme. Cette image composite peut ainsi être visualisée sur l'écran 28 de la machine de type ordinateur 27. Cette image peut ensuite être transmise à d'autres ordinateurs connectés à Internet.

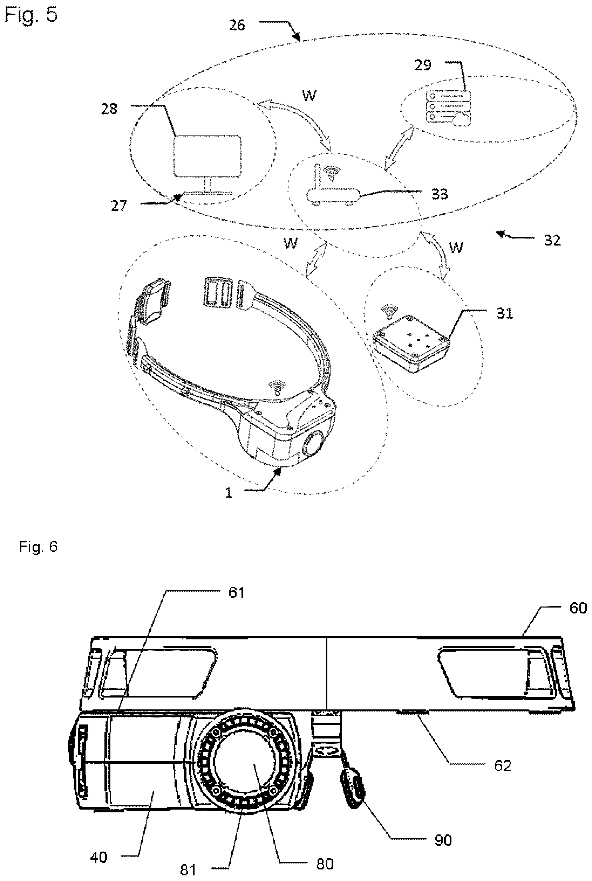

Un ensemble de loupe 32, selon une deuxième forme de réalisation représenté en Fig. 5, comprend les mêmes unités que l'ensemble de loupe 25 selon la première forme de réalisation de la Fig. 4, à savoir la loupe électronique 1, selon le premier mode de réalisation des Figs. 1 et 2 ou selon le deuxième mode de réalisation de la Fig. 3, l'unité de traitement des données 26 avec la machine de type ordinateur 27, munie de son écran 28, le serveur 29 et l'accessoire 31. La loupe électronique 1 et les composants 26, 27, 29 et 31 sont décrites en détail ci-dessus. Un routeur sans fil 33 forme une interface centrale entre les moyens de communication 19 de la loupe électronique 1, la machine de type ordinateur 27, le serveur 29 et l'accessoire 31.

Dans l'ensemble de loupe 32 de la deuxième forme de réalisation, le routeur sans fil 33 est configuré de sorte que la loupe électronique 1, la machine de type ordinateur 27, le serveur 29 et l'accessoire 31 sont sur le même réseau informatique local (LAN). La loupe électronique 1, la machine de type ordinateur 27, et l'accessoire 31 communiquent avec le routeur sans fil 33 grâce à la technologie sans fil Wi-Fi (Flèches W en Fig. 5). Si les données vidéo sont envoyées en streaming dans le cloud, le routeur sans fil 33 est également connecté à un réseau informatique étendu (WAN). Le serveur 29 communique avec le routeur sans fil 33 grâce à une liaison filaire.

La figure 6 représente en vue de face un troisième mode de réalisation pour une loupe électronique, comprenant notamment un serre tête 60, un module optoélectronique 40 et un module d'appui 90 avec des patins pour procurer un appui sur le nez de l'utilisateur. On peut prévoir un réglage en hauteur du module d'appui 90 pour ajuster le port de la loupe électronique à la morphologie de l'utilisateur.

Le serre tête 60 forme un châssis support comprenant une interface gauche 62 et une interface droite 61. Le module optoélectronique 40 embarque quant à lui au moins un objectif grossissant avec une lentille 80, et on peut prévoir, comme pour les autres modes de réalisation ci-dessus, des moyens de communication, et/ou une caméra d'acquisition, et/ou un séparateur de faisceau embarqué(s) dans le module optoélectronique 40. Ce module optoélectronique 40 forme un châssis secondaire qui peut être reçu aussi bien par l'interface gauche 62 que par l'interface droite 61 (typiquement via des pattes flexibles que s'accouplent de manière réversible avec des contre formes) pour positionner le module optoélectronique 40 en face d'un œil droit ou gauche de l'utilisateur. On peut noter que le module optoélectronique 40 de la figure 6 est symétrique et peut être renversé pour s'accoupler avec l'interface droite 61 aussi bien qu'avec l'interface gauche 62.

On peut prévoir un réglage de la position du module optoélectronique 40 sur le serre tête 60, de sorte à ajuster la position en profondeur ou en latéral par rapport à l'œil de l'utilisateur. Des coulisses avec des molettes et des vis de précision peuvent être prévues à cet effet.

Par ailleurs, on peut noter que le module optoélectronique 40 comprend, autour de la lentille 80, un module d'éclairage 81 de forme annulaire, pour éclairer un objet à observer sans générer d'ombres. On peut prévoir d'utiliser des diodes électroluminescentes réparties le long de la périphérie de la lentille 80 pour fournir un éclairage régulier de l'objet à observer.

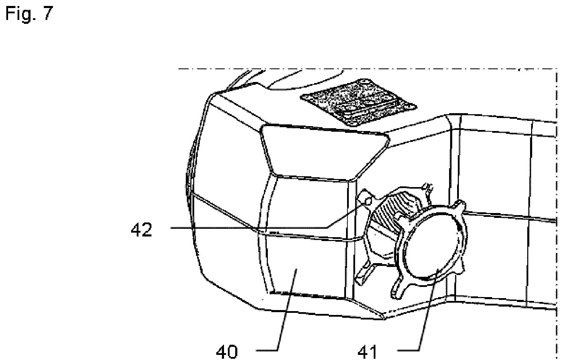

La figure 7 représente une vue arrière du module optoélectronique 40, avec une lentille de correction 41 qui peut être accouplée de manière amovible au module optoélectronique 40, via par exemple des aimants 42. Ainsi, un utilisateur qui a besoin d'une correction de sa vue peut accoupler une lentille de correction 81 adaptée (myopie, astigmatisme, ...) pour pouvoir utiliser la loupe électronique sans porter ses lunettes. Si l'utilisateur n'a pas besoin de correction optique, la lentille de correction 41 peut être une simple lentille neutre, c'est-à-dire un verre sans correction.

Selon l'invention, un procédé, utilisant la loupe électronique 1 selon le premier ou le deuxième mode de réalisation des Figs. 1, 2 et 3 respectives, avec l'ensemble de loupe 32 selon la première ou la deuxième forme de réalisation des Figs. 4 et 5 respectives, permet d'effectuer un contrôle d'un produit horloger 3, et notamment de manière non limitative un mécanisme de montre.

Le procédé de contrôle comprend différentes étapes successives. Une première étape du procédé de contrôle consiste pour l'utilisateur à observer le produit horloger 3 avec l'objectif 8 de la loupe électronique 1. Une deuxième étape du procédé de contrôle consiste à acquérir au moins une image du produit horloger 3 grâce à la caméra 12 de la loupe électronique 1. Une troisième étape du procédé de contrôle consiste à envoyer l'image du produit horloger acquise à l'unité de traitement des données 26, avec la machine de type ordinateur 27, qui est située à proximité de la loupe électronique 1.

Une quatrième étape du procédé de contrôle consiste à envoyer l'image du produit horloger 3 qui a été acquise lors de la deuxième étape à une deuxième machine de type ordinateur, qui est située à distance de la machine de type ordinateur 27 qui est située à proximité de la loupe électronique 1. Lors du contrôle, un horloger débutant muni de la loupe électronique 1 va pouvoir requérir l'assistance d'un horloger sénior situé à distance.

Une cinquième étape du procédé de contrôle consiste à envoyer à l'unité de traitement de données 26, la machine de type ordinateur 27 et/ou au serveur 29 l'image du produit horloger 3 acquise. L'unité de traitement de données 26 avec le serveur 29 est programmé pour reconnaître le produit horloger 3, en effectuant une comparaison entre l'image du produit horloger acquise et des données concernant le produit horloger 3. Ceci permet une reconnaissance automatique de la référence de la montre et/ou du calibre. Une sixième étape du procédé de contrôle consiste à afficher les données concernant le produit horloger 3 sur l'écran d'affichage 9 de la loupe électronique 1. Dans cette sixième étape, le plan de maintenance ou d'autres informations importantes, telles que forces et faiblesses du calibre, précautions à prendre sont affichées sur l'écran d'affichage 9. L'écran d'affichage 9 peut également afficher le fichier CAO 3D dans le but de comparer la montre ou le calibre en cours de contrôle avec le design théorique.

Une septième étape facultative du procédé de contrôle consiste à reconnaitre un outil à utiliser avec le produit horloger 3, pour générer au moins une information relative à l'outil. Cette étape de reconnaissance est mise en œuvre grâce à un accessoire de reconnaissance 31 connecté à la loupe électronique 1. Une huitième étape facultative du procédé de contrôle consiste à afficher l'information relative à l'outil générée sur l'écran d'affichage 9 de la loupe électronique 1.

Une neuvième étape facultative du procédé de contrôle consiste à reconnaitre au moins un composant du produit horloger 3, pour générer au moins une information relative au composant du mécanisme de montre. Cette étape de reconnaissance est mise en œuvre grâce à un accessoire de reconnaissance 31 connecté à la loupe électronique 1. Une dixième étape facultative du procédé de contrôle consiste à afficher l'information relative au composant du produit horloger 3 générée sur l'écran d'affichage 9 de la loupe électronique 1.

A titre non limitatif, les données comprennent notamment:
- des informations d'identification du produit horloger 3, et/ou
- des informations techniques du produit horloger 3, et/ou
- des informations d'identification d'un sous ensemble du produit horloger 3, et/ou
- des informations d'identification d'un composant du produit horloger 3, et/ou
- des informations d'identification d'un stade de montage du produit horloger 3.

Diverses modifications et/ou améliorations peuvent être apportées par l'homme du métier aux différents modes de réalisation de l'invention décrits dans la présente description sans sortir du cadre de l'invention. En particulier, la reconnaissance des outils ou des composants peut être effectuée grâce à un logiciel de reconnaissance d'image en se basant sur la forme des outils ou des composants visibles sur les images de la caméra d'acquisition. L'utilisation de QR-codes imprimés sur les outils ou les emballages des composants est également envisageable.

## Revendications

1. Loupe électronique d'horloger, destinée à observer un produit horloger (3), notamment un mécanisme de montre, munie :
- d'un objectif grossissant (8), pour observer le produit horloger (3),
- de moyens de communication (19), pour recevoir et/ou envoyer des données,
- d'au moins de l'un :
- d'un écran d'affichage (9), pour afficher des données, et
- d'une caméra d'acquisition, pour acquérir au moins une image du produit horloger,
- d'un séparateur de faisceau (13), prévu pour :
- diriger simultanément : vers un œil (2) d'un utilisateur au moins une image du produit horloger (3) provenant de l'objectif grossissant (8) et au moins une image de l'écran d'affichage (9), et/ou
- diriger simultanément vers un œil d'un utilisateur et vers la caméra d'acquisition au moins une image du produit horloger provenant de l'objectif grossissant.

2. Loupe électronique selon la revendication 1, dans laquelle les moyens de communication (19) sont prévus pour envoyer à un utilisateur distant l'image du produit horloger (3) acquise par la caméra d'acquisition (12), le séparateur de faisceau (13) étant prévu pour diriger simultanément vers la caméra d'acquisition (12) au moins une image du produit horloger (3) provenant de l'objectif grossissant (8) et au moins une image de l'écran d'affichage (9).

3. Loupe électronique selon la revendication 2, dans laquelle le séparateur de faisceau (13) comprend un miroir semi-réfléchissant pour séparer l'image de l'écran d'affichage (9) en une première partie réfractée dirigée vers la caméra (12) et une deuxième partie réfléchie dirigée vers l'œil (2) de l'utilisateur, et/ou pour séparer l'image du produit horloger (3) provenant de l'objectif grossissant (8), en une première partie réfractée dirigée vers l'œil (2) de l'utilisateur et une deuxième partie réfléchie dirigée vers la caméra d'acquisition (12).

4. Loupe électronique selon l'une des revendications 1 à 3, comprenant des moyens d'éclairage pour illuminer ou éclairer le produit horloger.

5. Ensemble de loupe électronique d'horloger, destinée à observer un produit horloger, notamment un mécanisme de montre, comprenant :
- une unité de traitement de données (26), possédant des données, et
- la loupe électronique (1), selon la revendication 2 ou 3 ou selon la revendication 4 dans sa dépendance à l'une des revendications 2 ou 3, les moyens de communication (19) de la loupe électronique (1) communiquant avec l'unité de traitement de données (26), pour recevoir les données et/ou pour envoyer à l'unité de traitement de données (26) l'image du produit horloger (3) acquise par la caméra d'acquisition (12).

6. Ensemble de loupe selon la revendication 5, comprenant des moyens pour commander la loupe électronique (1), les moyens de communication (19) de la loupe électronique (1) communiquant avec les moyens pour commander.

7. Ensemble de loupe selon la revendication 5 ou 6, comprenant des moyens de reconnaissance d'un outil à utiliser avec le produit horloger (3), pour sélectionner parmi des données concernant le produit horloger (3) au moins une information relative à l'outil, les moyens de communication (19) de la loupe électronique (1) communiquant avec les moyens de reconnaissance pour recevoir l'information sélectionnée relative à l'outil, de sorte à afficher l'information relative à l'outil sur l'écran d'affichage (9) de la loupe électronique (1).

8. Ensemble de loupe selon l'une des revendications 5 à 7, comprenant des moyens de reconnaissance d'au moins un composant du produit horloger (3), pour sélectionner parmi des données concernant le produit horloger (3) au moins une information relative au composant, les moyens de communication (19) de la loupe électronique (1) communiquant avec les moyens de reconnaissance pour recevoir l'information sélectionnée relative au composant, de sorte à afficher l'information relative au composant sur l'écran d'affichage (9) de la loupe électronique (1).

9. Ensemble de loupe selon l'une des revendications 5 à 8 comprenant un dispositif de mesure de paramètres concernant le produit horloger (3).

10. Ensemble de loupe selon l'une des revendications 5 à 9, dans lequel l'unité de traitement des données (26) comprend une machine de type ordinateur (27) connectée avec un serveur (29).

11. Ensemble de loupe selon la revendication 10, dans lequel la machine de type ordinateur (27) est connectée à un réseau informatique externe.

12. Ensemble de loupe selon l'une des revendications 5 à 11, comprenant en outre un routeur sans fil, formant interface entre les moyens de communication (19) de la loupe électronique (1), et/ou l'unité de traitement des données (26) et/ou les moyens de reconnaissance et/ou le dispositif de mesure (31).

13. Ensemble de loupe selon l'une des revendications 5 à 12, dans lequel les données comprennent notamment :
- des informations d'identification du produit horloger (3), et/ou
- des informations techniques du produit horloger (3), et/ou
- des informations d'identification d'un sous ensemble du produit horloger (3), et/ou
- des informations d'identification d'un composant du produit horloger (3), et/ou
- des informations d'identification d'un stade de montage du produit horloger (3).

14. Procédé pour effectuer un contrôle d'un produit horloger (3), notamment d'un mécanisme de montre, comprenant les étapes consistant :
- à observer le produit horloger (3) avec un objectif (8) d'une loupe électronique (1),
- à acquérir au moins une image du produit horloger (3) avec une caméra (12) de la loupe électronique (1), et
- à envoyer l'image du produit horloger (3) acquise à une machine de type ordinateur (27) à proximité de la loupe électronique (1),
- à envoyer à une unité de traitement de données (26) l'image du produit horloger (3) acquise, l'unité de traitement de données (26) étant programmée pour reconnaître le produit horloger (3), par comparaison entre l'image du produit horloger (3) acquise et des données concernant le produit horloger (3), et
- à afficher les données concernant le produit horloger (3) sur un écran d'affichage (9) de la loupe électronique (1).

15. Procédé selon la revendication 14, comprenant en outre l'étape consistant à envoyer l'image du produit horloger (3) acquise à une deuxième machine de type ordinateur, distant de la machine de type ordinateur (27) à proximité de la loupe électronique (1).

16. Procédé selon l'une des revendications 14 à 15, comprenant en outre les étapes consistant :
- à reconnaitre un outil à utiliser avec le produit horloger (3), pour générer au moins une information relative à l'outil, et
- à afficher l'information relative à l'outil générée sur l'écran d'affichage (9) de la loupe électronique (1).

17. Procédé selon l'une des revendications 14 à 16, comprenant en outre les étapes consistant :
- à reconnaitre au moins un composant du produit horloger (3), pour générer au moins une information relative au composant du produit horloger (3), et
- à afficher l'information relative au composant du produit horloger (3) générée sur l'écran d'affichage (9) de la loupe électronique (1).

## Patentansprüche

1. Elektronische Uhrmacherlupe zur Betrachtung eines Uhrenprodukts (3), insbesondere eines Uhrwerks, ausgestattet mit:
- einem Vergrößerungsobjektiv (8) zum Betrachten des Uhrenprodukts (3),
- Kommunikationsmitteln (19) zum Empfangen und/oder Senden von Daten,
- mindestens einem von:
- einem Anzeigebildschirm (9) zum Anzeigen der Daten, und
- einer Erfassungskamera zum Erfassen mindestens eines Bildes des Uhrenprodukts,
- einem Strahlteiler (13), der vorgesehen ist, um:
- gleichzeitig zu lenken: mindestens ein Bild des Uhrenprodukts (3), das von dem Vergrößerungsobjektiv (8) stammt, und mindestens ein Bild von dem Anzeigebildschirm (9), auf ein Auge (2) eines Benutzers, und/oder
- gleichzeitig mindestens ein Bild des Uhrenprodukts, das von dem Vergrößerungsobjektiv stammt, auf ein Auge (2) eines Benutzers und auf die Erfassungskamera zu lenken.

2. Elektronische Lupe nach Anspruch 1, wobei die Kommunikationsmittel (19) vorgesehen sind, an einen entfernten Benutzer das von der Erfassungskamera (12) erfasste Bild des Uhrenprodukts (3) zu senden, wobei der Strahlteiler (13) vorgesehen ist, mindestens ein von dem Vergrößerungsobjektiv (8) stammendes Bild des Uhrenprodukts (3) und mindestens ein Bild des Anzeigebildschirms (9) gleichzeitig auf die Erfassungskamera (12) zu lenken.

3. Elektronische Lupe nach Anspruch 2, wobei der Strahlteiler (13) einen halbreflektierenden Spiegel umfasst, um das Bild des Anzeigebildschirms (9) in einen ersten refraktierten, zur Kamera (12) gelenkten Teil und einen zweiten reflektierten, zum Auge (2) des Benutzers gelenkten Teil zu teilen, und/oder um das vom Vergrößerungsobjektiv (8) stammende Bild des Uhrenprodukts (3) in einen ersten refraktierten, zum Auge (2) des Benutzers gelenkten Teil und einen zweiten reflektierten, zur Erfassungskamera (12) gelenkten Teil zu teilen.

4. Elektronische Lupe nach einem der Ansprüche 1 bis 3, umfassend Beleuchtungsmittel zum Erhellen oder Beleuchten des Uhrenprodukts.

5. Elektronische Uhrmacherlupenanordnung zur Betrachtung eines Uhrenprodukts, insbesondere eines Uhrwerks, umfassend:
- eine Datenverarbeitungseinheit (26), die Daten besitzt, und
- die elektronische Lupe (1) nach Anspruch 2 oder 3 oder nach Anspruch 4 in seiner Abhängigkeit von einem der Ansprüche 2 oder 3, wobei die Kommunikationsmittel (19) der elektronischen Lupe (1) mit der Datenverarbeitungseinheit (26) kommunizieren, um die Daten zu empfangen und/oder um das von der Erfassungskamera (12) erfasste Bild des Uhrenprodukts (3) an die Datenverarbeitungseinheit (26) zu senden.

6. Lupenanordnung nach Anspruch 5, umfassend Mittel zur Steuerung der elektronischen Lupe (1), wobei die Kommunikationsmittel (19) der elektronischen Lupe (1) mit den Steuerungsmitteln zur Steuerung kommunizieren.

7. Lupenanordnung nach Anspruch 5 oder 6, umfassend Mittel zur Erkennung eines mit dem Uhrenprodukt (3) zu verwendenden Werkzeugs, um aus Daten, die das Uhrenprodukt (3) betreffen, mindestens eine Information bezüglich des Werkzeugs auszuwählen, wobei die Kommunikationsmittel (19) der elektronischen Lupe (1) mit den Erkennungsmitteln kommunizieren, um die ausgewählte Information bezüglich des Werkzeugs zu empfangen, so dass die Information bezüglich des Werkzeugs auf dem Anzeigebildschirm (9) der elektronischen Lupe (1) angezeigt wird.

8. Lupenanordnung nach einem der Ansprüche 5 bis 7, umfassend Erkennungsmittel mindestens einer Komponente des Uhrenprodukts (3), um aus Daten, die das Uhrenprodukt (3) betreffen, mindestens eine Information bezüglich der Komponente auszuwählen, wobei die Kommunikationsmittel (19) der elektronischen Lupe (1) mit den Erkennungsmitteln kommunizieren, um die ausgewählte Information bezüglich der Komponente zu empfangen, so dass die Information bezüglich der Komponente auf dem Anzeigebildschirm (9) der elektronischen Lupe (1) angezeigt wird.

9. Lupenanordnung nach einem der Ansprüche 5 bis 8, die eine Vorrichtung zur Messung von Parametern bezüglich des Uhrenprodukts (3) umfasst.

10. Lupenanordnung nach einem der Ansprüche 5 bis 9, wobei die Datenverarbeitungseinheit (26) eine mit einem Server (29) verbundene Maschine vom Typ Rechner (27) umfasst.

11. Lupenanordnung nach Anspruch 10, wobei die Maschine vom Typ Rechner (27) mit einem externen IT-Netzwerk verbunden ist.

12. Lupenanordnung nach einem der Ansprüche 5 bis 11, die ferner einen drahtlosen Router umfasst, der eine Schnittstelle zwischen den Kommunikationsmitteln (19) der elektronischen Lupe (1) und/oder der Datenverarbeitungseinheit (26) und/oder den Erkennungsmitteln und/oder der Messvorrichtung (31) bildet.

13. Lupenanordnung nach einem der Ansprüche 5 bis 12, wobei die Daten insbesondere umfassen:
- Identifikationsinformationen des Uhrenprodukts (3), und/oder
- technische Informationen des Uhrenprodukts (3), und/oder
- Identifikationsinformationen einer Unteranordnung des Uhrenprodukts (3), und/oder
- Identifikationsinformationen einer Komponente des Uhrenprodukts (3), und/oder
- Identifikationsinformationen eines Montagestadiums des Uhrenprodukts (3).

14. Verfahren zur Durchführung einer Kontrolle eines Uhrenprodukts (3), insbesondere eines Uhrwerks, das die folgenden Schritte umfasst:
- Betrachten des Uhrenprodukts (3) mit einem Objektiv (8) einer elektronischen Lupe (1),
- Erfassen mindestens eines Bildes des Uhrenprodukts (3) mit einer Kamera (12) der elektronischen Lupe (1), und
- Senden des erfassten Bildes des Uhrenprodukts (3) an eine Maschine vom Typ Rechner (27) in der Nähe der elektronischen Lupe (1),
- Senden des erfassten Bildes des Uhrenprodukts (3) an eine Datenverarbeitungsvorrichtung (26), wobei die Datenverarbeitungseinheit (26) so programmiert ist, dass sie das Uhrenprodukt (3) durch Vergleich des erfassten Bildes des Uhrenprodukts (3) mit Daten erkennt, die das Uhrenprodukt (3) betreffen, und
- Anzeigen der Daten bezüglich des Uhrenprodukts (3) auf einem Anzeigebildschirm (9) der elektronischen Lupe (1).

15. Verfahren nach Anspruch 14, das ferner den Schritt umfasst, der darin besteht, das erfasste Bild des Uhrenprodukts (3) an eine zweite Maschine vom Typ Rechner zu senden, die von der Maschine vom Typ Rechner (27) in der Nähe der elektronischen Lupe (1) entfernt ist.

16. Verfahren nach einem der Ansprüche 14 bis 15, das ferner die folgenden Schritte umfasst:
- Erkennen eines mit dem Uhrenprodukt (3) zu verwendenden Werkzeugs, um mindestens eine Information bezüglich des Werkzeugs zu erzeugen, und
- Anzeigen der erzeugten Information bezüglich des Werkzeugs auf dem Anzeigebildschirm (9) der elektronischen Lupe (1).

17. Verfahren nach einem der Ansprüche 14 bis 16, das ferner die folgenden Schritte umfasst:
- Erkennen mindestens einer Komponente des Uhrenprodukts (3), um mindestens eine Information bezüglich der Komponente des Uhrenprodukts (3) zu erzeugen, und
- Anzeigen der erzeugten Information bezüglich der Komponente des Uhrenprodukts (3) auf dem Anzeigebildschirm (9) der elektronischen Lupe (1).

## Claims

1. An electronic watchmaker's magnifier intended to observe a timepiece product (3), in particular a watch mechanism, provided with:
- a magnifying objective lens (8) for observing the timepiece product (3),
- communication means (19) for receiving and/or sending data,
- at least one of:
- a display screen (9) for displaying data, and
- an acquisition camera for acquiring at least one image of the timepiece product,
- a beam splitter (13) designed to:
- simultaneously direct: at least one image of the timepiece product (3) coming from the magnifying objective lens (8) and at least one image from the display screen (9) toward an eye (2) of a user,
and/or
- simultaneously direct at least one image of the timepiece product coming from the magnifying objective lens toward an eye of a user and toward the acquisition camera.

2. The electronic magnifier according to claim 1, wherein the communication means (19) are designed to send to a remote user the image of the timepiece product (3) acquired by the acquisition camera (12), the beam splitter (13) being designed to simultaneously direct towards the acquisition camera (12) at least one image of the timepiece product (3) coming from the magnifying objective lens (8) and at least one image from the display screen (9)

3. The electronic magnifier according to claim 2, wherein the beam splitter (13) comprises a semi-reflecting mirror for separating the image of the display screen (9) into a first refracted portion directed towards the camera (12) and a second reflected portion directed towards the eye (2) of the user, and/or for separating the image of the timepiece product (3) coming from the magnifying objective lens (8), into a first refracted portion directed towards the eye (2) of the user and a second reflected portion directed towards the acquisition camera (12).

4. The electronic magnifier according to any of claims 1 to 3, comprising lighting means for illuminating or lighting the timepiece product.

5. An electronic watchmaker's magnifier assembly, intended to observe a timepiece product, in particular a watch mechanism, comprising:
- a data processing unit (26), having data, and
- the electronic magnifier (1), according to claim 2 or 3 or according to claim 4 in its dependency on any of claims 2 or 3, the communication means (19) of the electronic magnifier (1) communicating with the data processing unit (26), to receive the data and/or to send to the data processing unit (26) the image of the timepiece product (3) acquired by the acquisition camera (12).

6. The magnifier assembly according to claim 5, comprising means for controlling the electronic magnifier (1), the communication means (19) of the electronic magnifier (1) communicating with the control means.

7. The magnifier assembly according to claim 5 or 6, comprising means for recognizing a tool to be used with the timepiece product (3), to select among data concerning the timepiece product (3) at least one piece of information relating to the tool, the communication means (19) of the electronic magnifier (1) communicating with the recognition means to receive the selected piece of information relating to the tool, so as to display the piece of information relating to the tool on the display screen (9) of the electronic magnifier (1).

8. The magnifier assembly according to any of claims 5 to 7, comprising means for recognizing at least one component of the timepiece product (3), to select among data concerning the timepiece product (3) at least one piece of information relating to the component, the communication means (19) of the electronic magnifier (1) communicating with the recognition means to receive the selected piece of information relating to the component, so as to display the piece of information relating to the component on the display screen (9) of the electronic magnifier (1).

9. The magnifier assembly according to any of claims 5 to 8 comprising a device for measuring parameters concerning the timepiece product (3).

10. The magnifier assembly according to any of claims 5 to 9, wherein the data processing unit (26) comprises a computer-type machine (27) connected to a server (29).

11. The magnifier assembly according to claim 10, wherein the computer-type machine (27) is connected to an outer computer network.

12. The magnifier assembly according to any of claims 5 to 11, further comprising a wireless router, forming an interface between the communication means (19) of the electronic magnifier (1), and/or the data processing unit (26) and/or the recognition means and/or the measuring device (31).

13. The magnifier assembly according to any of claims 5 to 12, wherein the data comprise in particular:
- identification information on the timepiece product (3), and/or
- technical information on the timepiece product (3), and/or
- identification information on a subassembly of the timepiece product (3), and/or
- identification information on a component of the timepiece product (3), and/or
- identification information on a timepiece product (3) mounting stage.

14. A method for performing an inspection of a timepiece product (3), in particular a watch mechanism, comprising the steps of:
- observing the timepiece product (3) with an objective lens (8) of an electronic magnifier (1),
- acquiring at least one image of the timepiece product (3) with a camera (12) of the electronic magnifier (1), and
- sending the acquired image of the timepiece product (3) to a computer-type machine (27) in the vicinity of the electronic magnifier (1),
- sending the acquired image of the timepiece product (3) to a data processing unit (26), the data processing unit (26) being programmed to recognize the timepiece product (3), by comparing the acquired image of the timepiece product (3) and data concerning the timepiece product (3), and
- displaying the data concerning the timepiece product (3) on a display screen (9) of the electronic magnifier (1).

15. The method according to claim 14, further comprising the step of sending the acquired image of the timepiece product (3) to a second computer-type machine, remote from the computer-type machine (27) in the vicinity of the electronic magnifier (1).

16. The method according to any of claims 14 to 15, further comprising the steps of:
- recognizing a tool to be used with the timepiece product (3), to generate at least one piece of information relating to the tool, and
- displaying the information relating to the tool generated on the display screen (9) of the electronic magnifier (1).

17. The method according to any of claims 14 to 16, further comprising the steps of:
- recognizing at least one component of the timepiece product (3), to generate at least one piece of information relating to the component of the timepiece product (3), and
- displaying the information relating to the component of the timepiece product (3) generated on the display screen (9) of the electronic magnifier (1).
